# EUROPEAN PATENT SPECIFICATION

(11) **EP 2 213 516 B1**
(45) Date of publication and mention of the grant of the patent: **11.07.2012**
(21) Application number: 09171138.2
(22) Date of filing: 23.09.2009
(51) Int. Cl.: B60R 9/06

(54) **Coupling device**
Kopplungsvorrichtung
Dispositif de couplage

(30) Priority: 30.01.2009 EP 09151777
(43) Date of publication of application: 04.08.2010
(73) Proprietor: Thule Sweden AB, 330 33 Hillerstorp (SE)
(72) Inventor: Lundgren, Anders, 514 70 Grimsås (SE); Nilvius, Anders, 331 35 Värnamo (SE)
(74) Representative: VALEA AB

(56) References cited:
- EP-A- 0 665 135
- EP-A- 1 170 178
- EP-A- 1 334 847
- DE-U1- 9 404 236
- DE-U1-202006 012 073
- NL-A- 9 500 605

## Description

### TECHNICAL FIELD

The present invention relates to a coupling device for coupling a load carrier to a towing hook of a vehicle, a load carrier comprising such a coupling device as well as use of a coupling device for securing a load carrier to a towing hook of a vehicle.

### BACKGROUND OF THE INVENTION

Load carriers for carrying various devices on a towing hook of a vehicle are generally known. Such load carriers may be of different kinds adapted for carrying specific objects, such as bicycles, luggage, skis, golf bags, wheelchairs, prams etc. For the purpose of coupling such a load carrier to a towing hook, the load carrier is provided with a coupling device.

The load carrier is supported by the vehicle only and it is important that the load carrier is firmly attached to the vehicle. The coupling device of the load carrier is a primary attachment point of the load carrier to the vehicle and as such must provide a stable and safe coupling to the towing hook. It is furthermore desired that the load carrier is quick and easy to install on, and remove from, the vehicle.

DE10155232 discloses a coupling device for a load carrier. The coupling device comprises a fixed and a movable coupling element arranged in a frame and adapted to engage a ball portion of a towing hook. By means of a lever and a mechanism the movable coupling element is moved to engage and release the towing hook. To hold the lever in a closed position, there is provided a clamp, which is movable along the lever. Both the lever and the clamp must be actuated when the coupling device is to be attached, or removed from, the towing hook.

In a non-related technical field EP 1334847 discloses a trailer coupling for coupling a trailer to a towing ball. Although the disclosed trailer coupling is of a friction type, movement between the trailer coupling and the towing ball must be allowed in order to establish a hinged connection between a trailer and a towing vehicle. Disclosed coupling part materials are sintered bronze and aluminium bronze, both of which are well-known bearing materials. Accordingly, a trailer coupling is not suitable for providing a stable and safe coupling of a load carrier to a towing hook.

### SUMMARY OF THE INVENTION

An object of the present invention is to provide a compact coupling device for a load carrier, which device can easily be firmly attached to a towing hook of a vehicle and be easily removed from the towing hook.

This object is achieved by a coupling device exhibiting the features characterised in independent claim 1.

According to the invention, the object is achieved by a coupling device for coupling a load carrier to a towing hook of a vehicle, which coupling device is adapted to provide coupling to the towing hook such that the load carrier in a mounted state is substantially rigidly attached to the vehicle and supported by the vehicle only. The coupling device comprises, a first coupling element adapted to abut against a first portion of the towing hook and a second coupling element adapted to abut against a second portion of the towing hook. The coupling device further comprises a frame arranged to accommodate at least the first portion of the towing hook and a transfer linkage for effecting displacement of the first coupling element with respect to the frame. The first coupling element is movably connected to the frame and is associated with an end of the transfer linkage. The transfer linkage comprises a first two-bar linkage including a first link bar and a second link bar and a second two-bar linkage including a third link bar and a fourth link bar. The first and second two-bar linkages are arranged in relation to each other such that when a force is applied to the second two-bar linkage the force is transferred via the first two-bar linkage to the first coupling element via the said end of the transfer linkage for releasing or engaging the towing hook. The first link bar and the second link bar of the first two-bar linkage are arranged at an angle within an interval of 135 - 180 degrees when the towing hook is engaged and the third link bar and the fourth link bar of the second two-bar linkage are arranged at an angle within an interval of 135 - 180 degrees when the towing hook is engaged.

Since the coupling device can be engaged with a towing hook with the application of one single force, the coupling device is easily attached to the towing hook. A quick attachment and a quick release with one respective single motion is possible. Moreover, the angular relationship between the link bars of the respective two-bar linkages ensures that a force sufficient for providing stable and safe coupling of a load carrier to the towing hook is achieved in a compact coupling device. The angular relationship may also ensure that a short lever or handle bar associated with the two-bar linkages is sufficient for an average person to apply a high clamping force on the first and second coupling elements to engage the towing hook.

As a result, the above mentioned object is achieved.

An angle between two link bars is measured between two fictive lines, each fictive line extending between centres of two rotation points of a link bar. The load carrier being substantially rigidly attached to the vehicle means that the load carrier is securely attached to the vehicle without the load carrier being able to move at its attachment point or points to the vehicle. Naturally, some portions of the load carrier as such may flex to a certain degree, in particular when a load is carried on the load carrier. The primary attachment point of the load carrier to the vehicle is constituted by the towing hook. According to example embodiments there may however be further attachment points between the load carrier and the towing hook. According to example embodiments the coupling device may be adapted to transfer at least half a weight of the load carrier and a carried load on the load carrier to the towing hook.

According to example embodiments the first link bar and the second link bar of the first two-bar linkage may be arranged at an angle within an interval of 170 - 180 degrees when the towing hook is engaged and the third link bar and the fourth link bar of the second two-bar linkage may be arranged at an angle within an interval of 170 - 180 degrees when the towing hook is engaged. Again, this angular arrangement may allow a person to apply a high clamping force to the coupling elements in a compact coupling device.

According to example embodiments the movable connection of the first coupling element to the frame of the coupling device may comprise a pivoting connection or a sliding connection or a combination thereof. The second coupling element may be fixedly connected to the frame or may form part of the frame. Alternatively, the second coupling element may be movably connected to the frame.

In example embodiments the first and second link bars of the first two-bar linkage may be connected by a common joint and the first link bar may be connected to the first coupling element via the said end of the transfer linkage. The third and fourth link bars of the second two-bar linkage may be connected by a collective joint. The third link bar may be connected to the first two-bar linkage at a connection point and the fourth link bar may be connected to the frame by means of an axle connection. The connection point is suitably closer to the common joint of the first two-bar linkage than any opposite ends of the first or second link bars. The two two-bar linkages being connected in this manner provide a high clamping force on the first coupling element. The connection point may be constituted by the common joint of the first two-bar linkage.

According to example embodiments the coupling device may comprise an adjustment arrangement for directly or indirectly adjusting the first two-bar linkage in relation to the frame and/or the towing hook. By adjusting the first two-bar linkage a clamping force of the first and/or second coupling elements against the towing hook may be adjusted such that the coupling device is securely attached to the towing hook. Adjustment of the first two-bar linkage may for instance be performed after an initial period of using the coupling device when wear of parts of the coupling device might have reduced the clamping force. The adjustment of the first two-bar linkage may be made when the coupling device is engaged with a towing hook or when it is released. The adjustment arrangement may comprise an adjustable frame joint, which connects the second link bar to the frame. The frame joint may comprise a threaded bolt, which is adjustable by means of one or more threaded nuts or by means of a threaded insert in the frame. Alternatively, an automatic adjustment of the frame joint may be achieved by means of a spring, e.g. one or more cup springs, arranged between the frame joint and the frame to provide a pressure against the first coupling element when it is engaged with the towing hook.

According to example embodiments the coupling device may comprises a lever adapted for application of the said force and which lever is associated with an end of the second two-bar linkage. A lever is an easy to use device for applying the force and only one single motion of the lever may be required to engage or release the towing hook. In combination with the two two-bar linkages, a shorter lever than in the prior art can be used for applying the said force. Also a shorter movement from an engaged position to a released position is possible. This means that a remainder of a travelling path of the lever can be utilized for increasing the distance between the first and second coupling elements to facilitate removal of the coupling device from the towing hook. Part of the lever may constitute the fourth link bar. Suitably a part of the lever extending between the axle connection and the collective joint of the second two-bar linkage may constitute the fourth link bar. In this way the lever and the second two-way linkage form one part for easy application of the force.

In example embodiments the third and fourth link bars may be connected by means of a collective joint and the fourth link bar may comprise an extending portion extending from the axle connection at an end opposite from the collective joint. The extending portion may for instance comprise the lever, as mentioned above, or simply a short bar. The second two-bar linkage may have a self-locking position, in which the coupling device is in a steady closed state, when the collective joint is positioned on one side of a straight line extending between the axle connection and the said connection point of the two-bar linkage to the first two-bar linkage and the extending portion abuts against a stop part fixed in relation to the frame. The stop part may e.g. be a part of the frame or a dedicated bolt or rivet. The self-locking position of the two-bar linkage makes sure that the coupling device may be securely attached to the towing hook without the need for any separate arrangement for preventing unwanted releasing of the coupling device.

According to example embodiments the first and second coupling elements may be adapted to engage a ball portion of the towing hook and/or a neck portion of the towing hook. A towing hook is commonly of a standard size, e.g. according to International Standard ISO 1103, which inter alia defines a diameter of 50 mm of the ball portion of the towing hook. The coupling device may of course be used in connection with towing hooks of other sizes. In order to provide a firm grip between the towing hook and the coupling device, the first and second coupling elements may be at least partially covered by a friction covering adapted to abut the towing hook. Such friction covering may also provide a distinct feeling when the coupling device is engaged or released from the towing hook.

In example embodiments the coupling device may comprise a lock for preventing manipulation of the transfer linkage. Such a lock will ensure that the coupling device and any attached load carrier cannot be stolen from the vehicle to which it is attached. Suitably the lock may be adapted to engage the lever with the frame.

According to a further aspect of the invention, a load carrier is provided comprising a coupling device as discussed above also with reference to the example embodiments above.

A further aspect of the invention is use of a coupling device according to the discussion above to releasably secure a load carrier to a towing hook of a vehicle. Such a load carrier may be adapted to carry a device for example selected from a list of: bicycle, luggage, ski, golf bag, wheelchair and pram.

Further features of, and advantages with, the present invention will become apparent when studying the appended claims and the following description. Those skilled in the art realize that different features of the present invention may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Figs. 1 - 3 illustrate a coupling device according to example embodiments in an open position, in an intermediate position and in a closed position, respectively,
Fig. 4 illustrates a part of a coupling device with a locking arrangement according to example embodiments,
Fig. 5 illustrates schematically a part of a coupling device according to example embodiments in a closed position,
Fig. 6 illustrates schematically a part of a coupling device according to example embodiments in a closed position, and
Fig 7 illustrates a load carrier according to example embodiments provided with a coupling device according to example embodiments.

### DETAILED DESCRIPTION OF EXAMPLE EMBODIMENTS

The present invention now will be described more fully with reference to the accompanying drawings, in which example embodiments are shown. However, this invention should not be construed as limited to the embodiments set forth herein. Disclosed features of example embodiments may be combined as readily understood by one of ordinary skill in the art to which this invention belongs. Like numbers refer to like elements throughout.

As used herein, the term "comprising" or "comprises" is open-ended, and includes one or more stated features, elements, steps, components or functions but does not preclude the presence or addition of one or more other features, elements, steps, components, functions or groups thereof.

As used herein, the term "and/or" includes any and all combinations of one or more of the associated listed items.

As used herein, the common abbreviation "e.g.", which derives from the Latin phrase "exempli gratia," may be used to introduce or specify a general example or examples of a previously mentioned item, and is not intended to be limiting of such item. If used herein, the common abbreviation "*i.e*.", which derives from the Latin phrase "id est," may be used to specify a particular item from a more general recitation.

The terminology used herein is for the purpose of describing particular embodiments only and is not intended to be limiting of the invention. As used herein, the singular forms "a", "an" and "the" are intended to include the plural forms as well, unless the context clearly indicates otherwise.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present.

Well-known functions or constructions may not be described in detail for brevity and/or clarity.

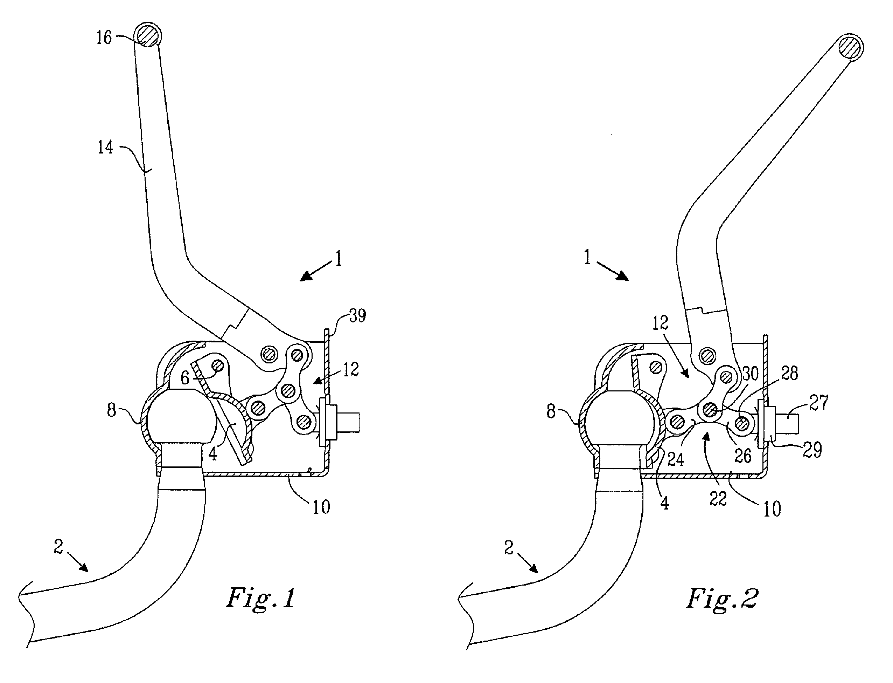

Fig. 1 illustrates a coupling device generally denoted 1 according to example embodiments. The coupling device 1 is shown in an open position with a towing hook 2 inserted in the coupling device 1. A first coupling element 4 is arranged to pivot about an axis 6 suitably connected to a frame 10 of the coupling device 1. A second coupling element 8 forms part of the frame 10 of the coupling device 1. The first coupling element 4 is connected to one end of a transfer linkage 12. A lever 14, provided with a handle 16, is connected to an other end of the transfer linkage 12. When the lever 14 is in the shown upright position, the transfer linkage 12 has pivoted the first coupling element 4 into the shown open position, in which the towing hook 2 may be inserted or extracted from the coupling device 1. The first and second coupling elements 4, 8 may have spherical surface portions to abut parts of a ball portion of the towing hook 2. The first and second coupling elements 4, 8 each abut a respective portion of the towing hook 2.

Fig. 2 illustrates the coupling device 1 according to Fig. 1 in an intermediate position when the first coupling element 4 is about to engage or release the towing hook 2. The transfer linkage 12 comprises a first two-bar linkage 22, including a first link bar 24 and a second link bar 26. The first link bar 24 is at an end pivotally connected with the first coupling element 4 and the second link bar 26 is pivotally connected to the frame 10 by means of a frame joint 28. The first and second link bars 24, 26 are pivotally connect by means of a common joint 30. The frame joint 28 is suitably laterally adjustable in relation to the frame 10 by means of a bolt 27 and a threaded insert 29 arranged in the frame 10. A non-shown ratchet mechanism may be provided for a stepwise adjustment of the frame joint 28.

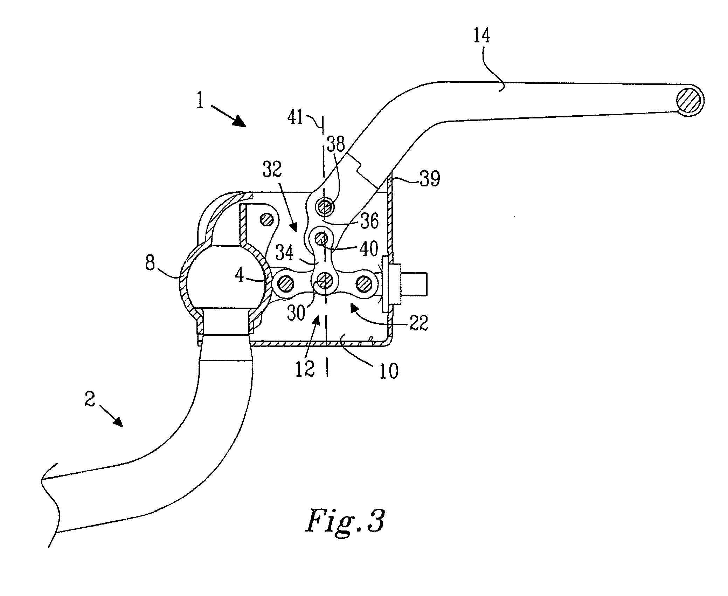

Fig. 3 illustrates the coupling device 1 according to Figs. 1 and 2 in a closed position with the first and second coupling elements 4, 8 safely engaging a ball portion of the towing hook 2. The transfer linkage 12 further comprises a second two-bar linkage 32 including a third link bar 34 and a fourth link bar 36. The third link bar 34 is at an end pivotally connected with the common joint 30 of the first two-bar linkage. The fourth link bar 36 is pivotally connected to the frame 10 by means of an axle 38 forming an axle connection. A part of the lever 14 on the other side of the axle 38 forms the fourth link bar 36. The third and fourth link bars 34, 36 are pivotally connect by means of a collective joint 40.

As can be readily understood from Figs. 1 to 3, the transfer linkage 12 transfers an applied force from the lever 14 to the first coupling element 4. The force is transferred via the second two-bar linkage 32 to the common joint 30 of the first two-bar linkage 22, which is moved from the folded position shown in Fig. 1 towards a more extended end position. In Fig. 2 the lever 14 has been moved to a position such that the first two-bar linkage 22 has been unfolded to about half-way its end position and the first coupling element 4 has reached a position, in which it is about to engage the towing hook 2. In Fig. 3 the lever 14 has reached an end position by abutment against a stop part 39 of the frame 10 and the first two-bar linkage 22 has reached its end position such that the towing hook 2 is firmly engaged between the first and second coupling elements 4, 8.

The second two-bar linkage 32 has a self-locking position, which is reached when the lever 14 has arrived at the position shown in Fig. 3. When the second two-bar linkage is in the self-locking position, the coupling device 1 is in a steady closed state because the lever 14 cannot move the second two-bar linkage 32 from this position without the application of a certain force. In detail:
- the first two-bar linkage 22 has reached a position, in which the first coupling element 4 abuts against the towing hook 2,
- the first two-bar linkage 22 is in its end position, in which it constitutes a resilient stop element for the second two-bar linkage 32,
- the second two-bar linkage 32, during movement of the lever 14 from the position shown in Fig. 1, has passed from a folded position with the collective joint 40 on one side of a straight line 41 extending between the axle 38 and the common joint 30, to a straight position along the straight line 41, and further to a folded position with the collective joint 40 on an opposite side of the straight line 41,
- a force has been needed to overcome a resilience, e.g. of the stop element formed by the first two-bar linkage 22, to make the collective joint 40 of the second two-bar linkage 32 pass the straight line 41, due to the distance between the axle 38 and common joint 30 of the first two-bar linkage 22 in its end position being shorter than the second two-bar linkage 32,
- the lever 14 abuts the stop part 39 of the frame 10 preventing further movement of the lever 14 in the direction of the stop part 39, and
- a force is needed to overcome the resilience of the stop element formed by the first two-bar linkage 22 to move the lever 14 back towards the positions shown in Figs. 1 and 2.

In Figs. 1 and 2 the collective joint 40 is on the right side of the straight line 41 and the lever 14 is movable by application of a force. In order to make the collective joint 40 of the second two-bar linkage 32 pass to the left of the straight line 41 the force applied to the lever 14 must be increased. Once the collective joint 40 has passed the straight line 41, the steady state has been reached.

According to example embodiments the frame 10 may have a certain elasticity. The frame 10 may for instance give 0,1 - 2 mm or more specifically 0,4 - 1,0 mm or even more specifically 0,6 - 0,7 mm when a clamping force of 10.000 - 50.000 N or more specifically 30.000 N is applied to the two coupling elements 4, 8. This elasticity may provide an advantage when engaging and releasing a towing hook. A lever of the coupling device for applying the force will have an agreeable not too rigid feeling to it. Also the coupling device will be less subjective to material fatigue.

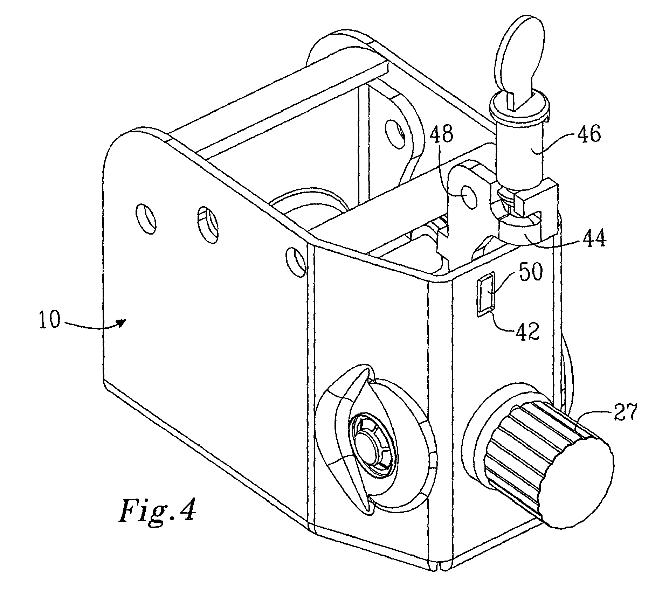

Fig. 4 illustrates a part of a coupling device 1 with a locking arrangement for preventing unwanted manipulation of a lever according to example embodiments. The frame 10 of the coupling device 1 is provided with an opening 42. A non-shown lever is provided with an engagement part 44 and a lock cylinder 46 of the locking arrangement. The engagement part 44 can at least partially pivot about an axis extending through an axis hole 48 such that a protrusion 50 of the engagement part 44 can be moved in and out of the opening 42 of the frame 10. The lock cylinder 46 can be turned about its longitudinal axis. In one position of the lock cylinder 46 the engagement part 44 can pivot about the axis extending through the axis hole 48. In a different position of the lock cylinder 46 the engagement part 44 is prevented from pivoting about said axis. When the engagement part 44 is prevented from pivoting with the protrusion 50 positioned in the opening 42, the non-shown lever is prevented from being moved, suitably when it is engaged with a towing hook of a vehicle. If the lock cylinder 46 has a locking function e.g. with a key, the lever can be locked to the frame of the coupling device 1 and thus the entire coupling device 1 can be locked to the towing hook to prevent theft. A knob of a bolt 27 of an adjustment arrangement is arranged at an outer surface of the frame 10 for easy access when adjustment of a two-bar linkage inside the frame 10 is required.

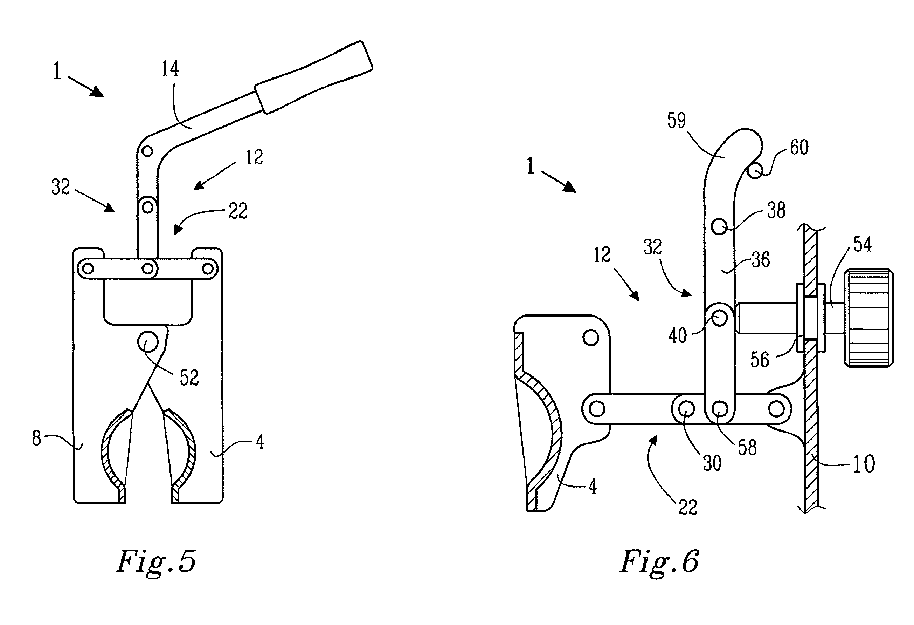

Fig. 5 illustrates schematically a part of a coupling device 1 according to example embodiments in a closed position. A first and a second coupling element 4, 8 for engaging a towing hook of a vehicle are arranged to pivot about a common axis extending through a pivot joint 52, which suitably is fixed in a non-shown frame of the coupling device 1. The two coupling elements 4, 8 are movable in relation to each other and the non-shown frame by means of a transfer linkage 12 comprising a first and a second two-bar linkage 22, 32. One link bar of the second transfer linkage is connected with a lever 14. When the lever 14 is moved in one direction, the transfer linkage 12 transfers the movement of the lever 14 to the coupling elements 4, 8 to arrive in the position shown in Fig. 5 for engaging a towing hook. When the lever 14 is moved in the other direction, the first and second coupling elements 4, 8 are opened to release the towing hook.

Fig. 6 illustrates schematically a part of a coupling device 1 according to example embodiments in a closed position. A first coupling element 4 adapted to cooperate with a non-shown fixed second coupling element for engaging a towing hook is connected to a transfer linkage 12. The transfer linkage 12 comprises a first and a second two-bar linkage 22, 32. A force is applied to the second two-bar linkage 32 by means of a threaded bolt 54, which can be moved back and fourth in a threaded insert 56 of a frame 10 of the coupling device 1. When the threaded bolt 54 is moved against the second two-bar linkage 32, suitably in the area of its collective joint 40, the second two-bar linkage 32 performs a movement from a folded position towards an essentially straight position, shown in Fig. 6, and its movement is transferred via the first two-bar linkage 22 to the first coupling element 4 to engage the towing hook. The second two-bar linkage 32 is pivotally connected to the first two-bar linkage 22 at a connection position 58 different from a common joint 30 of the first two-bar linkage 22. A link bar 36 of the second two-bar linkage 32 has an extended portion 59 extending beyond an axle 38 fixed to the frame 10 to abut against a stop part in the form of a stop pin 60 attached to the frame 10 when the second two-bar linkage 32 is in its essentially straight position. Since the stop pin 60 is attached to the frame 10 it is fixed in relation to the frame 10. In this position, with the threaded bolt 54 abutting the second two-bar linkage and the extended portion 59 abutting the stop pin 60 the coupling device 1 is in a steady closed state.

A non-shown connection between the threaded bolt 54 and the second two-bar linkage 32 will ensure that the second two-bar linkage 32 is moved into a folded position when the threaded bolt 54 is moved in a direction away from the second two-bar linkage 32. In this way the first coupling element 4 is moved away from an engaged towing hook to release the same.

It is also possible to provide a self-locking function of the second two-bar linkage 32 as described above in relation to the disclosure of Fig. 3. The first two-bar linkage 22 would have to provide the same resilience in its end position as mentioned above. Instead of a lever abutting a stop part of the frame, the extended portion 59 will abut the stop part in the form of a stop pin 60 and the second two-bar linkage must be attached and designed such that application of a force is need to make its collective joint 40 pass from one side of a straight line to an other side of the straight line.

Coupling devices 1 according to example embodiments are arranged to provide a sufficiently high clamping force to ensure firm attachment of a load carrier to a towing hook 2 of a vehicle. This is achieved by configuring the first and second two-bar linkages 22, 32 in a particular manner when the towing hook 2 is engaged by first and second coupling elements 4, 8 of the coupling device 1.

As can be readily seen in Figs. 3, 5 and 6, the first and second two-bar linkages 22, 32 are arranged in essentially straight positions when a respective coupling device 1 engages a towing hook. When the coupling device 1 is positioned onto the towing hook each two-bar linkage 22, 32 is in a folded position. During engaging of the towing hook the tow-bar linkages 22, 32 are moved from the respective folded positions towards the essentially straight positions. When the coupling elements 4, 8 of the coupling device 1 come into contact with the towing hook, the two-bar linkages 22, 32 are in the essentially straight position. Thus, a manual force applied by a user to the second two-bar linkage 32 results in the high clamping force. An average person mounting the load carrier on the towing hook 2 may easily apply the high clamping force of the first and second coupling elements 4, 8 to engage the towing hook. An essentially straight position may for instance include an angle between the two link bars of the respective two-bar linkages 22, 32 in an interval of 175 - 180 degrees.

It is to be noted that a sufficiently high clamping force may be achieved also by other configurations of first and second two-bar linkages 22, 32. When a towing hook is engaged by the coupling device 1, an angle between the first and second link bars 24, 26 and an angle between the third and fourth link bars 34, 36, respectively, may for instance be in an interval of 170 - 180 degrees. Alternatively, the angle between the first and second link bars 24, 26 and the angle between the third and fourth link bars 34, 36 may be between 135 - 180 degrees, respectively, when the towing hook is engaged by the coupling device 1.

According to example embodiments the first two-bar linkage 22 may be arranged such that its first and second link bars 24, 26 are not moved past a 180 degree position when a towing hook is engaged. That is, the coupling device 1 may be arranged such that the first and second link bars of the first two-bar linkage 22 are moved from a folded position on one side of an imaginary straight line, that would be formed if the first and second link bars where arranged at an angle of 180 degrees. In the folded position the coupling device may be positioned on a towing hook. When the towing hook has been engaged the first and second link bars have moved from the folded position to a position where the angle between them is in an interval of 135 - 179,9 degrees on the same side of the imaginary straight line. Alternatively, the angle may be in an interval of 170 - 179,9 degrees or in an interval of 175 - 179,9 degrees on the same side of the imaginary straight line. An adjustable frame joint, for instance as describe in relation to Fig. 2 above, may be utilized for adjusting the angle between the first and second link bars.

According to example embodiments the first and second link bars of the first two-bar linkage 22 may each have a length of about 22 mm, the third link bar may have a length of about 29 mm and the fourth link bar may have a length of about 18 mm. The third link bar is part of the second two-bar linkage 32 and is at one end connected with the first two-bar linkage 22. The fourth link bar is also part of the second two-bar linkage 22 and is at one end associated with a handle or a lever, which may have a length of about 240 mm. Such lengths of the link bars and the handle, and angles as described above between the link bars when a towing hook is engaged, enable an average person to apply a clamping force to the first and second coupling elements 4, 8 of the coupling device 1 to firmly attach a load carrier to a towing hook. Thus, in a compact coupling device, a clamping force in the above specified range of 10 - 50 kN may be achieved. Of course other link bar and handle length combinations according to example embodiments may also provide such a clamping force in a compact device with the above mentioned angles between the link bars when a towing hook is engaged. For instance the handle or lever may have a length below 500 mm and still provide a compact coupling device suitable for use in connection with load carriers.

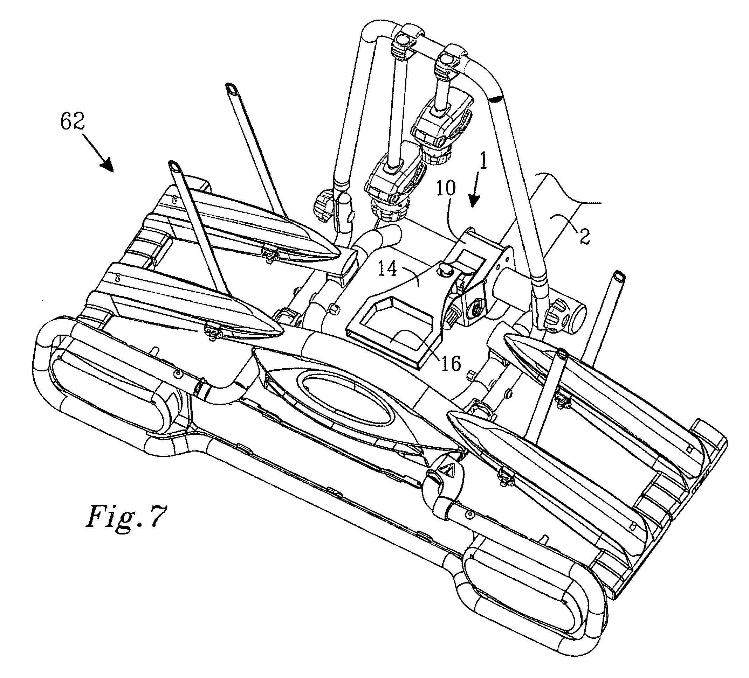

Fig 7 illustrates a load carrier according to example embodiments provided with a coupling device 1 according to example embodiments for coupling the load carrier to a towing hook of a vehicle. To a frame 10 of the coupling device 1 a frame structure 62 of the load carrier is attached. The frame structure 62 is adapted to carry two bicycles. By means of a lever 14 provided with a handle 16, at least one coupling element of the coupling device 1 is manipulated to engage or release the towing hook.

Example embodiments of coupling devices as described above may be used to releasably secure a load carrier to a towing hook of a vehicle. The load carrier may be adapted to carry one or more bicycles, pieces of luggage, skis, golf bags, wheelchairs and/or prams.

Different features of the example embodiments may be combined as understood by a person skilled in the art. Even though the invention has been described with reference to example embodiments, many different alterations, modifications and the like will become apparent for those skilled in the art. The transfer linkage of the coupling device may for instance comprise more than two two-bar linkages. The lever may be a separate part connected to the second two-bar linkage. The coupling device and load carrier and their incorporated parts may be made from same or different materials such as steel aluminium composites and plastics.

Therefore, it is to be understood that the foregoing is illustrative of various example embodiments and that the invention is defined only by the appended claims.

## Claims

1. A coupling device (1) for coupling a load carrier to a towing hook (2) of a vehicle, which coupling device (1) is adapted to provide coupling to said towing hook (2) such that said load carrier in a mounted state is substantially rigidly attached to said vehicle and supported by said vehicle only, and wherein said coupling device (1) comprises, a first coupling element (4) adapted to abut against a first portion of said towing hook (2), a second coupling element (8) adapted to abut against a second portion of said towing hook (2), a frame (10) arranged to accommodate at least said first portion of said towing hook (2) and a transfer linkage (12) for effecting displacement of said first coupling element (4) with respect to said frame (10), wherein said first coupling element (4) is movably connected to said frame (10) and is associated with an end of said transfer linkage (12), wherein
said transfer linkage (12) comprises a first two-bar linkage (22) including a first link bar (24) and a second link bar (26) and a second two-bar linkage (32) including a third link bar (34) and a fourth link bar (36), wherein said first and second two-bar linkages (22, 32) are arranged in relation to each other such that when a force is applied to said second two-bar linkage (32) said force is transferred via said first two-bar linkage (22) to said first coupling element (4) via said end of said transfer linkage (12) for releasing or engaging said towing hook (2), the coupling device (1) being **characterised in that**:
said first link bar (24) and said second link bar (26) of said first two-bar linkage (22) are arranged at an angle within an interval of 135 - 180 degrees when said towing hook (2) is engaged and said third link bar (34) and said fourth link bar (36) of said second two-bar linkage (32) are arranged at an angle within an interval of 135 - 180 degrees when said towing hook (2) is engaged.

2. The coupling device (1) according to claim 1, wherein said first link bar (24) and said second link bar (26) of said first two-bar linkage (22) are arranged at an angle within an interval of 170 - 180 degrees and said third link bar (34) and said fourth link bar (36) of said second two-bar linkage (32) are arranged at an angle within an interval of 170 - 180 degrees when said towing hook (2) is engaged.

3. The coupling device (1) according to any one of claims 1 and 2, wherein said coupling device (1) is adapted to transfer at least half a weight of said load carrier and a carried load on said load carrier to said towing hook (2).

4. The coupling device (1) according to any one of claims 1 - 3, wherein said second coupling element (8) is fixedly connected to said frame (10) or forms part of said frame (10).

5. The coupling device (1) according to any one of claims 1 - 3, wherein said second coupling element (8) is movably connected to said frame (10).

6. The coupling device (1) according to any one of the preceding claims, wherein said first and second link bars (24, 26) are connected by a common joint (30) and said first link bar (24) is connected to said first coupling element (4) via said end of said transfer linkage (12).

7. The coupling device (1) according to any one of the preceding claims, wherein said third link bar (34) is connected to said first two-bar linkage (22) at a connection point (30; 58) and said fourth link bar (36) is connected to said frame (10) by means of an axle connection (38).

8. The coupling device (1) according to claim 7, wherein said connection point is constituted by said common joint (30) of said first two-bar linkage (22).

9. The coupling device (1) according to any one of the preceding claims, wherein the device further comprises an adjustment arrangement for directly or indirectly adjusting said first two-bar linkage (22) in relation to said frame (10) and/or said towing hook (2).

10. The coupling device (1) according to any one of the preceding claims, wherein the device further comprises a lever (14) adapted for application of said force and which lever (14) is associated with an end of said second two-bar linkage (32).

11. The coupling device (1) according to claim 10, wherein part of said lever (14) constitutes said fourth link bar (36).

12. The coupling device (1) according to any one of claims 7 - 11, wherein said third and fourth link bars (34, 36) are connected by a collective joint (40) and said fourth link bar (36) comprises an extending portion extending from said axle connection (38) at an end opposite from said collective joint (40), and wherein said second two-bar linkage (32) has a self-locking position, in which the coupling device (1) is in a steady closed state, when said collective joint (40) is positioned on one side of a straight line (41) extending between said axle connection (38) and said connection point (30; 58) and said extending portion abuts against a stop part (39; 60) fixed in relation to said frame (10).

13. A load carrier (62) comprising a coupling device (1) according to any one of the preceding claims.

14. Use of a coupling device (1) according to any one of claims 1 - 12 to releasably secure a load carrier (62) to a towing hook (2) of a vehicle.

15. Use of a coupling device (1) according to claim 14, wherein the load carrier (62) is adapted to carry a device selected from a list of: bicycle, luggage, ski, golf bag, wheelchair and pram.

## Patentansprüche

1. Kopplungsvorrichtung (1), um einen Lastträger mit einem Zughaken (2) eines Fahrzeugs zu koppeln, wobei die Kopplungsvorrichtung (1) ausgestaltet ist, um für ein Koppeln mit dem Zughaken (2) zu sorgen, so dass der Lastträger in einem montierten Zustand im Wesentlichen fest an dem Fahrzeug angebracht und nur durch das Fahrzeug gehalten ist, und wobei die Kopplungsvorrichtung (1) umfasst ein erstes Kopplungselement (4), welches ausgestaltet ist, um gegen einen ersten Abschnitt des Zughakens (2) zu stoßen, ein zweites Kopplungselement (8), welches ausgestaltet ist, um gegen einen zweiten Abschnitt des Zughakens (2) zu stoßen, einen Rahmen (10), welcher angeordnet ist, um zumindest den ersten Abschnitt des Zughakens (2) aufzunehmen, und eine Übertragungsverbindung (12), um ein Versetzen des ersten Kopplungselements (4) bezüglich des Rahmens (10) zu bewirken, wobei das erste Kopplungselement (4) bewegbar mit dem Rahmen (10) verbunden ist und einem Ende der Übertragungsverbindung (12) zugeordnet ist,
wobei die Übertragungsverbindung (12) umfasst eine erste zweistrebige Verbindung (22) mit einer ersten Verbindungsstrebe (24) und einer zweiten Verbindungsstrebe (26) und eine zweite zweistrebige Verbindung (32) mit einer dritten Verbindungsstrebe (34) und einer vierten Verbindungsstrebe (36), wobei die erste und zweite zweistrebige Verbindung (22, 32) relativ zueinander angeordnet sind, so dass, wenn eine Kraft auf die zweite zweistrebige Verbindung (32) aufgebracht wird, diese Kraft mittels der ersten zweistrebigen Verbindung (22) auf das erste Kopplungselement (4) mittels des Endes der Übertragungsverbindung (12) übertragen wird, um den Zughaken (2) zu lösen oder in Eingriff zu bringen,
wobei die Kopplungsvorrichtung (1) **dadurch gekennzeichnet ist,**
**dass** die erste Verbindungsstrebe (24) und die zweite Verbindungsstrebe (26) der ersten zweistrebigen Verbindung (22) mit einem Winkel in einem Bereich von 135 - 180 Grad angeordnet sind, wenn sich der Zughaken (2) in Eingriff befindet, und dass die dritte Verbindungsstrebe (34) und die vierte Verbindungsstrebe (36) der zweiten zweistrebigen Verbindung (32) mit einem Winkel in einem Bereich von 135 - 180 Grad angeordnet sind, wenn sich der Zughaken (2) in Eingriff befindet.

2. Kopplungsvorrichtung (1) nach Anspruch 1, **dadurch gekennzeichnet, dass** die erste Verbindungsstrebe (24) und die zweite Verbindungsstrebe (26) der ersten zweistrebigen Verbindung (22) mit einem Winkel in einem Bereich von 170 - 180 Grad angeordnet sind, und dass die dritte Verbindungsstrebe (34) und die vierte Verbindungsstrebe (36) der zweiten zweistrebigen Verbindung (32) mit einem Winkel in einem Bereich von 170 - 180 Grad angeordnet sind, wenn sich der Zughaken (2) in Eingriff befindet.

3. Kopplungsvorrichtung (1) nach einem der Ansprüche 1 und 2, **dadurch gekennzeichnet, dass** die Kopplungsvorrichtung (1) ausgestaltet ist, um zumindest die Hälfte eines Gewichts des Lastträgers und einer auf dem Lastträger getragenen Last auf den Zughaken (2) zu übertragen.

4. Kopplungsvorrichtung (1) nach einem der Ansprüche 1 - 3, **dadurch gekennzeichnet, dass** das zweite Kopplungselement (8) fest mit dem Rahmen (10) verbunden ist oder einen Teil des Rahmens (10) bildet.

5. Kopplungsvorrichtung (1) nach einem der Ansprüche 1 - 3, **dadurch gekennzeichnet, dass** das zweite Kopplungselement (8) bewegbar mit dem Rahmen (10) verbunden ist.

6. Kopplungsvorrichtung (1) nach einem der vorhergehenden Ansprüche, **dadurch gekennzeichnet, dass** die erste und die zweite Verbindungsstrebe (24, 26) durch ein gemeinsames Gelenk (30) verbunden sind, und dass die erste Verbindungsstrebe (24) mittels des Endes der Übertragungsverbindung (12) mit dem ersten Kopplungselement (4) verbunden ist.

7. Kopplungsvorrichtung (1) nach einem der vorhergehenden Ansprüche, **dadurch gekennzeichnet, dass** die dritte Verbindungsstrebe (34) mit der ersten zweistrebigen Verbindung (22) an einem Verbindungspunkt (30; 58) verbunden ist, und dass die vierte Verbindungsstrebe (36) mittels einer Achsenverbindung (38) mit dem Rahmen (10) verbunden ist.

8. Kopplungsvorrichtung (1) nach Anspruch 7, **dadurch gekennzeichnet, dass** der Verbindungspunkt durch das gemeinsame Gelenk (30) der ersten zweistrebigen Verbindung (22) gebildet ist.

9. Kopplungsvorrichtung (1) nach einem der vorhergehenden Ansprüche, **dadurch gekennzeichnet, dass** die Vorrichtung darüber hinaus eine Einstellungsanordnung umfasst, um direkt oder indirekt die erste zweistrebige Verbindung (22) bezüglich des Rahmens (10) und/oder des Zughakens (2) einzustellen.

10. Kopplungsvorrichtung (1) nach einem der vorhergehenden Ansprüche, **dadurch gekennzeichnet, dass** die Vorrichtung darüber hinaus einen Hebel (14) umfasst, welcher zum Aufbringen der Kraft ausgestaltet ist, und dass der Hebel (14) einem Ende der zweiten zweistrebigen Verbindung (32) zugeordnet ist.

11. Kopplungsvorrichtung (1) nach Anspruch 10, **dadurch gekennzeichnet, dass** ein Teil des Hebels (14) die vierte Verbindungsstrebe (36) ausbildet.

12. Kopplungsvorrichtung (1) nach einem der Ansprüche 7 - 11, **dadurch gekennzeichnet, dass** die dritte und vierte Verbindungsstrebe (34, 36) durch ein gemeinsames Gelenk (40) verbunden sind, und dass die vierte Verbindungsstrebe (36) einen sich erstreckenden Abschnitt umfasst, welcher sich von der Achsenverbindung (38) an einem Ende gegenüber des gemeinsamen Gelenks (40) erstreckt, und dass die zweite zweistrebige Verbindung (32) eine selbst verriegelnde Stellung aufweist, in welcher sich die Kopplungsvorrichtung in einem stabilen geschlossenen Zustand befindet, wenn das gemeinsame Gelenk (40) auf einer Seite einer geraden Linie (41) angeordnet ist, welche sich zwischen der Achsenverbindung (38) und dem Verbindungspunkt (30; 58) erstreckt, und wobei der sich erstreckende Abschnitt gegen ein Stoppteil (39; 60), welches bezüglich des Rahmens (10) befestigt ist, stößt.

13. Lastträger (62), welcher eine Kopplungsvorrichtung (1) nach einem der vorhergehenden Ansprüche umfasst.

14. Verwendung einer Kopplungsvorrichtung (1) nach einem der Ansprüche 1 - 12, um einen Lastträger (62) lösbar mit einem Zughaken (2) eines Fahrzeugs zu befestigen.

15. Verwendung einer Kopplungsvorrichtung (1) nach Anspruch 14, **dadurch gekennzeichnet, dass** der Lastträger (62) ausgestaltet ist, um eine Vorrichtung zu tragen, welche ausgewählt ist aus einer Liste von: einem Fahrzeug, Gepäck, Ski, einer Golftasche, einem Rollstuhl und einem Kinderwagen.

## Revendications

1. Dispositif d'accouplement (1) destiné à accoupler un dispositif de transport de chargement à un crochet de remorquage (2) d'un véhicule, lequel dispositif d'accouplement (1) est adapté pour fournir un accouplement audit crochet de remorquage (2) de telle sorte que ledit dispositif de transport de chargement dans un état monté soit fixé de manière sensiblement rigide audit véhicule et supporté par ledit véhicule seulement, et dans lequel ledit dispositif d'accouplement (1) comprend un premier élément d'accouplement (4) adapté pour venir en butée contre une première partie dudit crochet de remorquage (2), un second élément d'accouplement (8) adapté pour venir en butée contre une seconde partie dudit crochet de remorquage (2), un bâti (10) agencé pour recevoir au moins ladite première partie dudit crochet de remorquage (2) et une tringlerie de transfert (12) destinée à effectuer un déplacement dudit premier élément d'accouplement (4) par rapport audit bâti (10), ledit premier élément d'accouplement (4) étant relié de manière mobile audit bâti (10) et associé à une extrémité de ladite tringlerie de transfert (12), dans lequel :
ladite tringlerie de transfert (12) comprend une première tringlerie à deux barres (22) composée d'une première barre de liaison (24) et d'une deuxième barre de liaison (26), et une seconde tringlerie à deux barres (32) composée d'une troisième barre de liaison (34) et d'une quatrième barre de liaison (36), dans lequel lesdites première et seconde tringleries à deux barres (22, 32) sont agencées l'une par rapport à l'autre de sorte que lorsqu'une force est appliquée à ladite seconde tringlerie à deux barres (32), ladite force est transférée par l'intermédiaire de ladite première tringlerie à deux barres (22) audit premier élément d'accouplement (4) par l'intermédiaire de ladite extrémité de ladite tringlerie de transfert (12), afin de libérer ledit crochet de remorquage (2) ou venir en prise avec celui-ci, le dispositif d'accouplement (1) étant **caractérisé en ce que** :
ladite première barre de liaison (24) et ladite deuxième barre de liaison (26) de ladite première tringlerie à deux barres (22) sont disposées selon un angle qui se situe dans une plage comprise entre 135 degrés et 180 degrés lorsque ledit crochet de remorquage (2) est mis en prise, et ladite troisième barre de liaison (34) et ladite quatrième barre de liaison (36) de ladite seconde tringlerie à deux barres (32) sont disposées selon un angle qui se situe dans une plage comprise entre 135 degrés et 180 degrés lorsque ledit crochet de remorquage (2) est mis en prise.

2. Dispositif d'accouplement (1) selon la revendication 1, dans lequel ladite première barre de liaison (24) et ladite deuxième barre de liaison (26) de ladite première tringlerie à deux barres (22) sont disposées selon un angle qui se situe dans une plage comprise entre 170 degrés et 180 degrés, et ladite troisième barre de liaison (34) et ladite quatrième barre de liaison (36) de ladite seconde tringlerie à deux barres (32) sont disposées selon un angle qui se situe dans une plage comprise entre 170 degrés et 180 degrés lorsque ledit crochet de remorquage (2) est mis en prise.

3. Dispositif d'accouplement (1) selon l'une quelconque des revendications 1 et 2, dans lequel ledit dispositif d'accouplement (1) est adapté pour transférer la moitié au moins du poids dudit dispositif de transport de changement et d'un chargement transporté sur ledit dispositif de transport de changement audit crochet de remorquage (2).

4. Dispositif d'accouplement (1) selon l'une quelconque des revendications 1 à 3, dans lequel ledit second élément d'accouplement (8) est relié de manière fixe audit bâti (10) ou fait partie dudit bâti (10).

5. Dispositif d'accouplement (1) selon l'une quelconque des revendications 1 à 3, dans lequel ledit second élément d'accouplement (8) est relié de manière amovible audit bâti (10).

6. Dispositif d'accouplement (1) selon l'une quelconque des revendications précédentes, dans lequel lesdites première et deuxième barres de liaison (24, 26) sont reliées par un joint commun (30), et ladite première barre de liaison (24) est reliée audit premier élément d'accouplement (4) par l'intermédiaire de ladite extrémité de ladite tringlerie de transfert (12).

7. Dispositif d'accouplement (1) selon l'une quelconque des revendications précédentes, dans lequel ladite troisième barre de liaison (34) est reliée à ladite première tringlerie à deux barres (22) au niveau d'un point de connexion (30 ; 58), et ladite quatrième barre de liaison (36) est reliée audit bâti (10) au moyen d'une connexion à axe (38).

8. Dispositif d'accouplement (1) selon la revendication 7, dans lequel ledit point de connexion est constitué par ledit joint commun (30) de ladite première tringlerie à deux barres (22).

9. Dispositif d'accouplement (1) selon l'une quelconque des revendications précédentes, dans lequel le dispositif comprend en outre un agencement de réglage destiné à régler de manière directe ou indirecte ladite première tringlerie à deux barres (22) par rapport audit bâti (10) et/ou audit crochet de remorquage (2).

10. Dispositif d'accouplement (1) selon l'une quelconque des revendications précédentes, dans lequel le dispositif comprend en outre un levier (14) adapté à l'application de ladite force, lequel levier (14) est associé à une extrémité de ladite seconde tringlerie à deux barres (32).

11. Dispositif d'accouplement (1) selon la revendication 10, dans lequel une partie dudit levier (14) constitue ladite quatrième barre de liaison (36).

12. Dispositif d'accouplement (1) selon l'une quelconque des revendications 7 à 11, dans lequel lesdites troisième et quatrième barres de liaison (34, 36) sont reliées par un joint collectif (40), et ladite quatrième barre de liaison (36) comprend une partie d'extension qui s'étend à partir de ladite connexion à axe (38) au niveau d'une extrémité opposée audit joint collectif (40), et dans lequel ladite seconde tringlerie à deux barres (32) présente une position autobloquante, dans lequel le dispositif d'accouplement (1) se trouve dans un état fermé stable lorsque ledit joint collectif (40) est positionné sur un côté d'une ligne droite (41) qui s'étend entre ladite connexion à axe (38) et ledit point de connexion (30 ; 58), et ladite partie d'extension vient en butée contre une partie d'arrêt (39 ; 60) qui se trouve dans une relation fixe par rapport audit bâti (10).

13. Dispositif de transport de chargement (62) comprenant un dispositif d'accouplement (1) selon l'une quelconque des revendications précédentes.

14. Utilisation d'un dispositif d'accouplement (1) selon l'une quelconque des revendications 1 à 12, destiné à fixer de manière libérable un dispositif de transport de chargement (62) à un crochet de remorquage (2) d'un véhicule.

15. Utilisation d'un dispositif d'accouplement (1) selon la revendication 14, dans lequel le dispositif de transport de chargement (62) est adapté pour transporter un dispositif sélectionné dans une liste qui comprend : une bicyclette, des bagages, des skis, un sac de golf, un fauteuil roulant et un landau.
